# EUROPÄISCHE PATENTSCHRIFT

(11) **EP 2 279 828 B1**
(45) Veröffentlichungstag und Bekanntmachung des Hinweises auf die Patenterteilung: **29.02.2012**
(21) Anmeldenummer: 10007729.6
(22) Anmeldetag: 26.07.2010
(51) Int. Cl.: B23Q 1/54, B23Q 5/02

(54) **Aufspanneinrichtung und Bearbeitungseinrichtung**
Clamping device and processing device
Dispositif de maintien et dispositif de traitement

(30) Priorität: 30.07.2009 DE 102009035679
(43) Veröffentlichungstag der Anmeldung: 02.02.2011
(73) Patentinhaber: Ponterlitschek, Roland, 73770 Denkendorf (DE)
(72) Erfinder: Ponterlitschek, Roland, 73770 Denkendorf (DE)
(74) Vertreter: Kocher, Mark Werner

(56) Entgegenhaltungen:
- WO-A1-2008/092646
- WO-A2-2009/100863
- DE-U1- 29 817 672
- US-A1- 2008 315 476

## Beschreibung

Die Erfindung betrifft eine Aufspanneinrichtung zum Ausrichten eines Werkstücks gegenüber einem Bearbeitungswerkzeug, mit einer Tragvorrichtung, die zur Übertragung von Bearbeitungskräften zwischen Werkstück und Bearbeitungswerkzeug ausgebildet ist, und mit einer beweglich an der Tragvorrichtung angeordneten Haltevorrichtung, die eine zur Aufnahme des Werkstücks eingerichtete Aufspannfläche aufweist, sowie mit Antriebsmitteln, die zur Einleitung von Drehbewegungen zwischen Haltevorrichtung und Tragvorrichtung um zwei senkrecht zueinander ausgerichtete Drehachsen ausgebildet sind, wobei die Haltevorrichtung eine Arbeitsausnehmung aufweist, die die Aufspannfläche derart durchsetzt, dass eine der Aufspannfläche zugewandte Unterseite eines Werkstücks von einem Bearbeitungswerkzeug durch die Arbeitsausnehmung hindurch bearbeitbar ist. Desweiteren betrifft die Erfindung auch eine Bearbeitungseinrichtung.

Eine aus dem Stand der Technik bekannte Aufspanneinrichtung wird auch als Universal-Rundtisch bezeichnet und wird zum Aufspannen und Ausrichten von Werkstücken gegenüber Bearbeitungswerkzeugen eingesetzt. Als Bearbeitungswerkzeug kann beispielsweise ein Fräser einer Fräsmaschine, ein Laserkopf einer Laserbearbeitungsmaschine oder eine Wasserstrahldüse einer Wasserstrahlbearbeitungsmaschine eingesetzt werden. Die bekannte Aufspanneinrichtung umfasst eine auch als Schwenksupport bezeichnete Tragvorrichtung, die für eine Festlegung an einem Maschinengestell oder Maschinentisch der Bearbeitungsmaschine vorgesehen ist. Die Tragvorrichtung dient zur Übertragung von Bearbeitungskräften, die von dem Bearbeitungswerkzeug auf das Werkstück aufgebracht werden, auf das Maschinengestell oder auf den Maschinentisch. An der Tragvorrichtung ist eine Haltevorrichtung angebracht, die auch als Teilapparat bezeichnet wird und die eine Aufspannfläche zur Aufnahme des Werkstücks aufweist. Die Aufspannfläche ist gegenüber der Tragvorrichtung um zwei senkrecht zueinander ausgerichtete Rotationsachsen verschwenkbar. Hierzu sind Antriebsmittel vorgesehen, die Drehbewegungen der Haltevorrichtung relativ zur Tragvorrichtung einleiten können.

Mit der bekannten Aufspanneinrichtung kann beispielsweise ein würfelförmiges Werkstück bearbeitet werden. Hierbei sind fünf der insgesamt sechs Seitenflächen des Würfels in einer einzigen Aufspannung bearbeitbar. Die sechste Würfelfläche, die auf der Aufspannfläche der Haltevorrichtung aufliegt, kann nicht in dieser Aufspannung bearbeitet werden, sondern setzt einen Umspannvorgang und einen nachfolgenden zweiten Bearbeitungsschritt voraus.

Aus der W02009/100863 A2 ist eine Aufspannvorrichtung für eine rechnergesteuerte, spanabhebende Bearbeitungsmaschine, insbesondere für eine CAD/CAM - Fräseinrichtung, zur Herstellung von zahntechnischen Werkstücken mit einer verschiebbar gelagerten Haltevorrichtung bekannt. An der Haltevorrichtung ist eine Trägerplatte zur Aufnahme eines Formrohlings gelagert, wobei die Trägerplatte wenigstens eine Durchtrittsöffnung aufweist, in der der Formrohling wenigstens um eine zur Hauptebene der Trägerplatte im Wesentlichen parallele Drehachse schwenkbar anordenbar bzw. angeordnet ist.

Die WO 2008/092646 A1 offenbart eine Trägerplatte für eine Kopierfräseinrichtung, die zwei Halteplatten umfasst, die an einer gemeinsamen Trägerplatte schwenkbar gelagert sind, wobei wie Trägerplatte als solches ebenfalls schwenkbar gelagert ist, wobei die jeweiligen Schwenkbewegungen manuell eingeleitet werden.

Die DE 29817672 U1 offenbart einen Drehtisch mit einer um eine Mittelachse drehbar auf der Oberseite eines Gehäuses gelagerten, im wesentlichen ebenflächigen Tischplatte, die getrieblich mit der Welle eines am Gehäuse angeordneten elektrischen Antriebsmotors gekoppelt ist, deren Drehzahl durch eine Steuereinrichtung zwischen Null und einer Höchstdrehzahl nach einer vorgebbaren Weg- und/oder Drehzahl- und/oder Beschleunigungs-Charakteristik stufenlos veränderbar ist, wobei in der getrieblichen Kopplung der Tischplatte mit der Welle des elektrischen Antriebsmotors ein Winkelgetriebe mit Zahneingriff angeordnet ist, dessen von der Welle des Antriebsmotors angetriebenes Zahnritzel geringen Durchmessers und kleiner Zähnezahl mit einem mit der Tischplatte gekoppelten Zahnrad großen Durchmessers und großer Zähnezahl kämmt.

Die Aufgabe der Erfindung besteht darin, eine Aufspanneinrichtung bereitzustellen, die eine Bearbeitung aller Außenoberflächen eines Werkstücks in einer Aufspannung ermöglicht.

Diese Aufgabe wird für eine Aufspanneinrichtung der eingangs genannten Art mit den Merkmalen des Anspruchs 1 gelöst. Hierbei ist vorgesehen, dass die Tragvorrichtung hülsenförmig ausgebildet ist und zumindest teilweise einen Arbeitsraum begrenzt, in dem die Haltevorrichtung aufgenommen ist und dass die Antriebsmittel einen elektrischen oder fluidischen Energiewandler umfassen, der außerhalb des Arbeitsraums an der Tragvorrichtung angeordnet ist und der für die Einleitung einer Drehbewegung auf die Haltevorrichtung ausgebildet ist, wobei die Antriebswelle des ersten Energiewandlers und die dem zweiten Energiewandler zugeordnete Welle konzentrisch zueinander angeordnet sind.

Durch die hülsenförmige Ausbildung ermöglicht die Tragvorrichtung eine Doppelfunktion. Neben der Übertragung von Bearbeitungskräften auf ein Maschinengestell oder einen Maschinentisch kann die Tragvorrichtung einen Arbeitsraum begrenzen. In dem Arbeitsraum können beispielsweise Bearbeitungsmedien und/oder Abtragpartikel freigesetzt werden, die von der Tragvorrichtung vorteilhafter Weise vor einem Austritt in die Umgebung zurückgehalten werden.

Darüber hinaus umfassen die Antriebsmittel einen elektrischen oder fluidischen, insbesondere pneumatischen oder hydraulischen, Energiewandler, der außerhalb des Arbeitsraums an der Tragvorrichtung angeordnet ist und der für die Einleitung einer Drehbewegung auf die Haltevorrichtung ausgebildet ist. Bei dem Energiewandler kann es sich beispielsweise um einen Elektromotor oder einen Fluidmotor handeln, der die bereitgestellte elektrische, hydraulische oder pneumatische Energie in eine Drehbewegung umsetzt. Der Energiewandler kann direkt oder über eine Getriebeeinrichtung mit der Haltevorrichtung gekoppelt sein. Vorzugsweise ist eine Getriebeeinrichtung, insbesondere ein Stirnrad- oder Kegelradgetriebe, zur Untersetzung der vom Energiewandler bereitgestellten Rotationsbewegung vorgesehen. Durch die Anordnung außerhalb des Arbeitsraums, der zumindest im Wesentlichen von der Tragvorrichtung begrenzt wird, entfallen für die Antriebsmittel aufwändige Isolations- und/oder Abdichtungsmaßnahmen, die bei einer Anordnung der Antriebsmittel im Arbeitsraum zum Schutz der Antriebsmittel gegen aggressive Prozeßmedien oder Abtragpartikel getroffen werden müssten.

Zudem ist vorgesehen, dass die Antriebswelle des ersten Energiewandlers und die dem zweiten Energiewandler zugeordnete Antriebswelle koaxial, insbesondere konzentrisch, zueinander angeordnet sind. Bei einer koaxialen Anordnung liegen die Mittelachsen oder Drehachsen der beiden Antriebswellen auf einer gemeinsamen Achse, wobei die beiden Antriebswellen in axialer Richtung beabstandet voneinander angeordnet sein können. Bei einer koaxialen Anordnung der Antriebswellen erstrecken sich die beiden Antriebswellen zumindest bereichsweise entlang eines gemeinsamen Achsabschnitts. Dabei umgreift die eine Antriebswelle die andere Antriebswelle zumindest bereichsweise. Dies kann beispielsweise dadurch erreicht werden, dass wenigstens eine Antriebswelle als Rohr ausgebildet ist und die zweite Antriebswelle das Rohr durchsetzt. Dadurch wird eine kompakte und im Hinblick auf die zu treffenden Abdichtmaßnahmen vorteilhafte Ausgestaltung der Kraftübertragung zwischen den Energiewandlern und der Haltevorrichtung verwirklicht. Vorzugsweise ist die dem zweiten Energiewandler zugeordnete Antriebswelle rohrförmig ausgebildet, wodurch im Inneren dieser Antriebswelle der zur Aufnahme der Antriebswelle des ersten Energiewandlers notwendige Raum zur Verfügung gestellt werden kann. Besonders bevorzugt sind in der zweiten Antriebswelle Lagermittel für eine drehbare Lagerung der ersten Antriebswelle aufgenommen. Bei einer konzentrischen Anordnung der beiden Antriebswellen ist lediglich eine, insbesondere genau eine, Öffnung in der Tragvorrichtung vorgesehen, um beide Antriebswellen mit dem Werkstückträger zu koppeln.

Vorzugsweise ist die Größe der Arbeitsausnehmung so bemessen, dass sämtliche an der Unterseite des Werkstücks zu bearbeitenden Oberflächen, die der Aufspannfläche zugewandt sind, ohne Werkzeugwechsel oder Umspannen mit dem gleichen Bearbeitungswerkzeug bearbeitet werden können, das vorzugsweise auch für die Bearbeitung der übrigen Oberflächen des Werkstücks eingesetzt wird. Somit kann ohne Umspannen an allen zu bearbeitenden Außenoberflächen des Werkstücks die gleiche Bearbeitungsqualität und ein rascher Bearbeitungsablauf erreicht werden. Das Werkstück kann beispielsweise mit geeigneten Spannmitteln unmittelbar auf die Aufspannfläche aufgespannt werden, hierzu werden beispielsweise Spannpratzen eingesetzt. Alternativ kann das Werkstück auf einem Werkstückträger oder einer Werkstückpalette aufgespannt sein, der vorzugsweise rahmenartig ausgebildet ist, um die Bearbeitung der Unterseite des Werkstücks durch die Arbeitsausnehmung nicht zu behindern und der seinerseits mit entsprechenden Spannmitteln auf der Aufspannfläche befestigt werden kann.

Zweckmäßig ist es, wenn die Haltevorrichtung einen drehbar an der Tragvorrichtung gelagerten Drehkranz und einen drehbar am Drehkranz gelagerten Drehtisch umfasst, wobei die Arbeitsausnehmung von einer ersten Ausnehmung im Drehtisch und/oder von einer zweiten Ausnehmung im Drehkranz bestimmt ist. Durch die drehbare Lagerung des Drehkranzes gegenüber der Tragvorrichtung wird die erste der beiden Drehachsen bestimmt, die beispielsweise in horizontaler Richtung ausgerichtet sein kann. Durch die drehbare Lagerung des Drehtisches gegenüber dem Drehkranz wird die zweite Drehachse bestimmt, die senkrecht zur ersten Drehachse ausgerichtet ist. Durch diese Anordnung der Drehachsen kann eine Bearbeitung nahezu aller Außenoberflächen des Werkstücks durch geeignete Verschwenkung der Haltevorrichtung um die beiden Drehachsen erreicht werden. Je nach Aufbauweise der Haltevorrichtung bestimmt eine erste Ausnehmung im Drehtisch oder eine zweite Ausnehmung im Drehkranz die Arbeitsausnehmung. Bei einer alternativen Ausführungsform der Erfindung ist vorgesehen, dass die Arbeitsausnehmung sowohl von der Ausnehmung im Drehtisch als auch von der Ausnehmung im Drehkranz bestimmt wird.

Vorteilhaft ist es, wenn der Drehkranz und/oder der Drehtisch ringartig ausgebildet sind. Hierdurch wird eine kostengünstige Herstellweise für den Drehkranz und/oder den Drehtisch gewährleistet, da diese Komponenten vorzugsweise als Drehteile hergestellt werden können. Zudem ist bei einer ringartigen Gestaltung des Drehkranzes und/oder des Drehtisches der Raumbedarf für die Drehbewegungen der Haltevorrichtung minimal, so dass die erfindungsgemäße Aufspanneinrichtung auch in kompakte Bearbeitungsmaschinen integriert werden kann. Besonders bevorzugt ist die zweite Drehachse, die durch die drehbare Lagerung des Drehtischs am Drehkranz bestimmt wird, gleichzeitig eine Rotationssymetrieachse für den Drehkranz und/oder den Drehtisch. Die erste Drehachse, die die Drehbeweglichkeit des Drehkranzes gegenüber der Tragvorrichtung gewährleistet, ist in radialer Richtung des ringartigen Drehkranzes und/oder des ringartigen Drehtischs und dadurch senkrecht zur zweiten Drehachse ausgerichtet.

Bei einer Weiterbildung der Erfindung ist vorgesehen, dass die Arbeitsausnehmung derart ausgebildet ist, dass die der Aufspannfläche zugewandte Unterseite eines Werkstücks zumindest im Wesentlichen vollständig von einem Bearbeitungswerkzeug bearbeitbar ist. Vorzugsweise sind die Arbeitsausnehmung und das Werkstück derart aufeinander abgestimmt, dass eine größte Erstreckung des Werkstücks in einer von der Aufspannfläche bestimmten Aufspannebene kleiner als eine minimale Querschnittserstreckung der Arbeitsausnehmung ist. Besonders bevorzugt ist die größte Erstreckung des Werkstücks kleiner als ein Durchmesser des vorzugsweise ringartig ausgebildeten Drehkranzes bzw. Drehtisches. Dadurch kann bei geeigneter Aufspannung des Werkstücks, beispielsweise durch Stehbolzen, die in das Werkstück eingeschraubt werden und die über Spannmittel an der Aufspannfläche befestigt werden, eine allseitige Bearbeitung des Werkstücks in einer einzigen Aufspannung gewährleistet werden. Je nach Gestaltung des Werkstücks und der am Werkstück auszuführenden Bearbeitungsschritte kann es auch ausreichend sein, wenn das Werkstück mit seiner der Aufspannfläche zugewandten Unterseite bereichsweise auf der Aufspannfläche aufliegt und durch Spannmittel auf die Aufspannfläche gespannt wird.

Zweckmäßig ist es, wenn ein minimaler Querschnitt der Arbeitsausnehmung größer als eine Radialerstreckung des Drehkranzes und/oder der Drehtisches gewählt ist. Der minimale Querschnitt der Arbeitsausnehmung kann vorzugsweise in einer parallel zur Aufspannebene ausgerichteten Querschnittsebene ermittelt werden. Eine vorteilhafte Bearbeitbarkeit des Werkstücks und eine kompakte Gestaltung der Aufspanneinrichtung sind gewährleistet, wenn der minimale Querschnitt größer als eine Radialerstreckung des Drehkranzes und/oder des Drehtisches gewählt wird. Unter der Radialerstreckung ist beispielsweise bei einer ringartigen Ausgestaltung des Drehkranzes und/oder des Drehtisches die maximale Ringbreite zu verstehen, die der Drehkranz und/oder der Drehtisch aufweisen.

Vorzugsweise ist ein erster Energiewandler drehfest einer mit dem zweiten Energiewandler zugeordneten Welle gekoppelt. Besonders bevorzugt ist ein erster Energiewandler drehfest mit einer Lagerwelle verbunden, die von einem zweiten Energiewandler drehbar bewegbar ist. Hierdurch kann eine besonders kompakte Gestaltung der Antriebsmittel gewährleistet werden. Zudem ist hierbei vorteilhaft, dass die Drehbewegungen auf die Haltevorrichtung unabhängig voneinander ausgeführt werden können, da keine kinematische Zwangskopplung der beiden Energiewandler über die Haltevorrichtung vorliegt. Vielmehr trägt die dem zweiten Energiewandler zugeordnete Welle sowohl den ersten Energiewandler als auch die Haltevorrichtung.

Bei einer weiteren Ausgestaltung der Erfindung ist vorgesehen, dass eine dem Energiewandler zugeordnete Welle einen Wandabschnitt der Tragvorrichtung durchsetzt und mit der Haltevorrichtung verbunden ist, wobei zwischen Tragvorrichtung und Welle Dichtmittel für eine Kapselung des Arbeitsraums angeordnet sind. Mit Hilfe der Dichtmittel kann ein unerwünschtes Austreten von Prozeßmedien und/oder Abtragspartikeln aus dem Arbeitsraum verhindert werden. Dies ist insbesondere bei Bearbeitungsprozessen von Interesse, bei denen große Mengen an Kühlschmierstoff, z.B. bei Schneidvorgängen, oder Wasser oder mit Abrasivpartikeln versetztem Wasser zum Abtrag von Graten an Werkstücken unter hohem Druck eingesetzt werden.

Zweckmäßig ist es, dass die Haltevorrichtung freitragend im Arbeitsraum angeordnet ist und, insbesondere ausschließlich, an der dem zweiten Energiewandler zugeordneten Welle abgestützt ist. Eine freitragende Aufhängung der Haltevorrichtung an lediglich einer Abstützstelle, beispielsweise der dem zweiten Energiewandler zugeordneten Welle, ist insbesondere dann von Interesse, wenn aufgrund des vorgesehenen Bearbeitungsvorgangs aufwändige Abdichtmaßnahmen zur Abdichtung der Antriebswellen gegenüber der Tragvorrichtung erforderlich sind. Dies ist beispielsweise der Fall für die Nutzung der Aufspanneinrichtung in einer Wasserstrahlbearbeitungseinrichtung. Zudem kann eine freitragende Ausgestaltung der Haltevorrichtung insbesondere dann in Erwägung gezogen werden, wenn es sich bei dem Bearbeitungsverfahren um ein Verfahren handelt, dass keine höheren Ansprüche an die Reproduzierbarkeit und Positioniergenauigkeit des Bearbeitungswerkzeugs gegenüber dem Werkstück erfordert, wie dies beispielsweise beim Wasserstrahlentgraten der Fall ist.

Bei einer weiteren Ausgestaltung der Erfindung ist vorgesehen, dass der Drehkranz der Haltevorrichtung an einander gegenüberliegenden Wandabschnitten der Tragvorrichtung drehbar gelagert ist. Dies ist insbesondere dann von Interesse, wenn hohe Bearbeitungskräfte auf das Werkstück und die Haltevorrichtung einwirken, die von der Tragvorrichtung abgeleitet werden müssen. Beispielsweise können solche hohen Bearbeitungskräfte bei einer Fräsbearbeitung des Werkstücks auftreten. Durch die beidseitige Lagerung der Haltevorrichtung können die auftretenden Bearbeitungsskräfte symmetrisch in die Tragvorrichtung eingeleitet werden, wodurch eine besonders hohe Tragfähigkeit von Haltevorrichtung und Tragvorrichtung gewährleistet ist.

Zweckmäßig ist es, wenn die Energiewandler an entgegengesetzten Außenoberflächenbereichen der Tragvorrichtung angeordnet sind. Hierdurch kann eine drehwinkelbegrenzungsfreie Verschwenkung der Haltevorrichtung gegenüber der Tragvorrichtung erreicht werden. Die beiden Energiewandler sind entweder direkt oder über eine Getriebeeinrichtung und entsprechende Lagerwellen mit der Haltevorrichtung verbunden. Vorzugsweise sind die Antriebswellen der Energiewandler oder die den Energiewandlern zugeordneten Lagerwellen konzentrisch, insbesondere koaxial zueinander ausgerichtet.

Bei einer weiteren Ausführungsform der Erfindung ist vorgesehen, dass der Drehtisch zusammen mit einer Flanschhülse einen U-förmigen, in radialer Richtung nach außen offenen Querschnitt aufweist, in dem der Drehkranz zumindest teilweise aufgenommen ist. Hierdurch begrenzen der Drehtisch, die Flanschhülse und der Drehkranz einen vorzugweise rotationssymmetrischen, insbesondere ringförmigen, Innenraum, in dem beispielsweise die Lagermittel für die Relativbeweglichkeit zwischen Drehkranz und Drehtisch angeordnet sind. Umlaufende Spalte zwischen Drehtisch, Flanschhülse und Drehkranz können insbesondere mit Dichtringen gegen das Eindringen von Prozessmedien oder Abtragpartikeln in den Innenraum versehen sein.

Für eine Bearbeitungseinrichtung wird die Aufgabe der Erfindung mit den Merkmalen des Anspruchs 15 gelöst. Die erfindungsgemäße Bearbeitungsvorrichtung zeichnet sich gegenüber bekannten Bearbeitungsvorrichtungen, beispielsweise Fräsmaschinen, Laserbearbeitungsmaschinen, Wasserstrahlbearbeitungsmaschinen, dadurch aus, dass sie eine erfindungsgemäße Aufspanneinrichtung umfasst. Beispielsweise ist bei einer Ausbildung der Bearbeitungseinrichtung als Wasserstrahlbearbeitungsmaschine vorteilhaft, dass die Antriebsmechanik, die die Energiewandler und Getriebeeinrichtungen sowie je nach Ausführungsform vorhandene Elektrik / Elektronik umfasst, außerhalb des Arbeitsbereichs des Wasserstrahls liegt und somit nicht durch Spitzwassereinwirkung und/oder vom Werkstück abgetragenes Material in ihrer Funktion beeinträchtigt wird. Bei einer derartigen Wasserstrahlbearbeitung können Drücke von über 1000 bar und Wassertemperaturen von nahezu 100 Grad Celsius auftreten.

Weitere Vorteile und Merkmale der Erfindung ergeben sich aus der Zeichnung und der nachfolgenden Beschreibung bevorzugter Ausführungsbeispiele. Hierbei zeigt:
- Figur 1: eine schematische Schnittdarstellung einer ersten Ausführungsform der Aufspanneinrichtung mit einer Haltevorrichtung in einer Ruhestellung,
- Figur 2: eine schematische Teilschnittdarstellung der Auf- spannvorrichtung gemäß Figur 1 mit der Haltevor- richtung in einer verschwenkten Stellung,
- Figur 3: eine schematische Darstellung einer zweiten Ausfüh- rungsform einer Aufspanneinrichtung in einer Ruhe- stellung,
- Figur 4: die Aufspanneinrichtung gemäß Figur 3 in einer um 180 Grad verschwenkten Stellung mit aufgespanntem Werkstück und schematisch dargestelltem Bearbei- tungswerkzeug,
- Figur 5: die Aufspanneinrichtung gemäß der Figuren 3 und 4 in einer um 90 Grad verschwenkten Stellung, und
- Figur 6: eine weitere Ausführungsform einer Aufspanneinrich- tung.

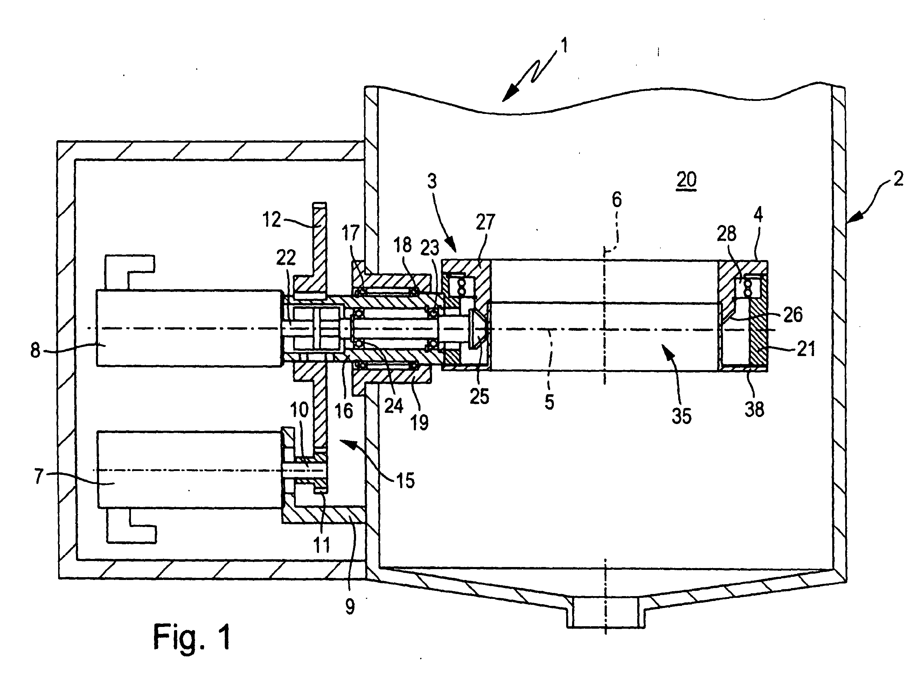

Eine in der Figur 1 dargestellte Aufspanneinrichtung 1 ist zur Ausrichtung eines nicht dargestellten Werkstücks gegenüber einem nicht dargestellten Bearbeitungswerkzeug mittels Schwenkbewegungen ausgebildet. Die Aufspanneinrichtung 1 umfasst eine exemplarisch topfförmig ausgebildete Tragvorrichtung 2. Die Tragvorrichtung 2 ist mit nicht näher dargestellten Befestigungsmitteln ausgestattet, um eine Befestigung der Aufspanneinrichtung 1 an einem nicht dargestellten Maschinengestell oder einem nicht dargestellten Maschinentisch einer Bearbeitungsmaschine zu ermöglichen. An einem in der Figur 1 oben gelegenen Endbereich weist die Tragvorrichtung 2 eine nicht bezeichnete Zugangsöffnung auf, durch die ein nicht dargestellter Arbeitskopf einer Bearbeitungseinrichtung an das zu bearbeitende Werkstück angenähert werden kann. An einem in der Figur 1 unten gelegenen Endbereich weist die Tragvorrichtung 2 einen trichterförmigen, nicht bezeichneten Bodenabschnitt auf, der mit einer Ausnehmung versehen ist, die in einem ebenfalls nicht bezeichneten Stutzen mündet. An den Stutzen kann beispielsweise ein Abflussschlauch zur Abfuhr von flüssigem Bearbeitungsmedium oder von Spänen angeschlossen werden.

An der Tragvorrichtung 2 ist eine exemplarisch als Rundtisch ausgebildete Haltevorrichtung 3 schwenkbeweglich angeordnet. Die Haltevorrichtung 3 umfasst eine beispielsweise eben ausgebildete Aufspannfläche 4. Die Aufspannfläche 4 ist zur Aufnahme eines nicht dargestellten Werkstücks oder einer Werkstückpalette vorgesehen, die ihrerseits das Werkstück trägt.

Die Haltevorrichtung 3 ist gegenüber der Tragvorrichtung 2 um zwei senkrecht zueinander ausgerichtete Drehachsen 5, 6 verschwenkbar, die in der Ruhestellung gemäß Figur 1 beide in der Darstellungsebene liegen. Durch Verschwenkung der Haltevorrichtung 3 um die erste, vorliegend horizontal ausgerichtete Drehachse 5 kann die zweite Drehachse 6 aus der Darstellungsebene der Figur 1 hinausbewegt werden.

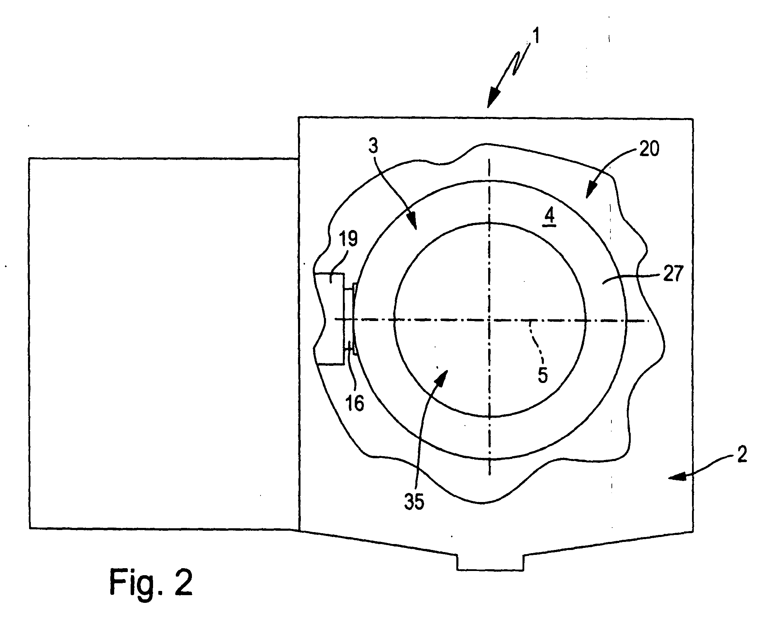

Exemplarisch kann die Haltevorrichtung 3 ausgehend von der Ruhestellung gemäß der Figur 1 eine in der Figur 2 näher dargestellte Schwenkstellung einnehmen. In dieser Schwenkstellung ist die Haltevorrichtung 3 z.B. um die erste Drehachse 5 um 90 Grad verschwenkt, so dass die zweite Drehachse 6 orthogonal zur Darstellungsebene der Figuren 1 und 2 liegt und ein nicht dargestelltes Werkstück in der Darstellungsebene gedreht werden könnte.

Die Aufspanneinrichtung 1 gemäß der Figur 1 umfasst zwei Energiewandler 7, 8, die beispielsweise als Elektromotoren ausgebildet sein können. Der erste Energiewandler 7 ist ortsfest an einem Haltebügel 9 befestigt, der seinerseits an einer Außenwand der Tragvorrichtung 2 befestigt ist. Eine Antriebswelle 10 des ersten Energiewandlers 7 wirkt exemplarisch über eine aus zwei Zahnrädern 11, 12 bestehende Getriebeeinrichtung 15 und eine nicht näher bezeichnete Passfederverbindung auf eine als Lagerwelle 16 bezeichnete zweite Antriebswelle. Die Lagerwelle 16 ist über in einer Axialrichtung voneinander beabstandete Kugellager 17, 18 drehbar in einer Stützmuffe 19 aufgenommen, die abdichtend an der Trageinrichtung 2 festgelegt ist, insbesondere mit dieser verschweißt ist, und diese durchsetzt.

An einem Endbereich der Lagerwelle 16, die in den von der Tragvorrichtung 2 bestimmten Arbeitsraum 20 hineinragt, ist ein Drehkranz 21 der Haltevorrichtung 3 befestigt. Durch die drehbare Lagerung der Lagerwelle 16 kann der Drehkranz 21 um die exemplarisch der Figur 1 in horizontaler Richtung ausgerichtete erste Drehachse 5 verschwenkt werden. Die Einleitung dieser Schwenkbewegung erfolgt über den ersten Energiewandler 7 und die Getriebeeinrichtung 15. An einen dem Arbeitsraum 20 abgewandten Endbereich der Lagerwelle 16 ist das Gehäuse des zweiten Energiewandlers 8 drehfest an der Lagerwelle 16 angebracht, so dass dieser stets der Drehbewegung der Lagerwelle 16 um die erste Drehachse 5 folgt. Eine Antriebswelle 22 des zweiten Energiewandlers 8 ist über Kugellager 23, 24 drehbeweglich in der Lagerwelle 16 gelagert. Die Antriebswelle 22 umfasst eine schematisch dargestellte, nicht näher bezeichnete Kupplung. Diese Kupplung kann beispielsweise als Überlastkupplung, insbesondere als Rutschkupplung ausgebildet sein, um eine Überlastung des Energiewandlers 8 bei Blockierung der Drehbewegung des Drehkranzes 21 zu vermeiden.

An einem in den Arbeitsraum 20 hineinragenden Endbereich ist die Antriebswelle 22 mit einem Kegelrad 25 versehen. Das Kegelrad 25 greift in einen Kegelzahnring 26 ein, der mit einem beispielsweise ringförmig ausgebildeten Drehtisch 27 verbunden ist. Der Drehtisch 27 ist gegenüber dem Drehkranz 21 mit einem Kugellager 28, das exemplarisch als Doppelrillenkugellager ausgebildet ist, drehbar gelagert. Dem Drehtisch 27, der in der Schnittebene gemäß der Figur 1 einen L-förmigen Querschnitt aufweist, ist eine Flanschhülse 38 mit ebenfalls L-förmigem Querschnitt zugeordnet. Der Drehtisch 27 und die Flanschhülse 38 ergänzen sich zu einem in radialer Richtung nach außen offenen U-förmigen Querschnitt, in dem der Drehkranz 21 vollständig aufgenommen ist. Zwischen den radial nach außen abragenden Schenkeln des U-förmigen Querschnitts von Drehtisch 27 und Flanschhülse 38 und dem beispielsweise ringförmig ausgebildeten Drehkranz 21 vorliegende Bewegungsspalte sind mit nicht näher dargestellten, ringförmigen Dichtmitteln, insbesondere Wellendichtringen, abgedichtet.

In der in Figur 1 dargestellten Ruhestellung ist die vom Drehtisch 27 und dem zugehörigen Kugellager 28 bestimmte zweite Drehachse 6 in vertikaler Richtung ausgerichtet. Entscheidend ist, dass die zweite Drehachse 6 stets senkrecht zur ersten Drehachse 5 ausgerichtet ist.

Eine vom ringförmig ausgeführten Drehtisch 27 bestimmte, exemplarisch zylindrisch ausgebildete Arbeitsausnehmung 35 dient für eine Bearbeitung der Unterseite eines nicht dargestellten Werkstücks. Hierbei wird davon ausgegangen, dass die Unterseite des Werkstücks der Aufspannfläche 4 zugewandt ist.

Aufgrund der Befestigung des zweiten Energiewandlers 8 an der Lagerwelle 16 kann gewährleistet werden, dass eine Schwenkbewegung um die erste Drehachse 5 unabhängig von einer Schwenkbewegung um die zweite Drehachse 6 stattfindet. Hierzu muss jedoch in Kauf genommen werden, dass die Verschwenkbarkeit um die erste Drehachse 5 auf einen bestimmten Winkelbereich begrenzt sein muss, sofern eine Energieversorgung des zweiten Energiewandlers 8 nicht über eine entsprechende Drehkupplung, wie sie sowohl für eine fluidische Energieübertragung wie auch für eine elektrische Energieübertragung, insbesondere als elektrische Schleifringkupplung, verfügbar ist, vorgenommen werden soll. In den meisten Anwendungsfällen ist es ausreichend, wenn die Verschwenkbarkeit um die erste Drehachse 5 beispielsweise ca. plus/minus 270 Grad beträgt, was mit einem flexiblen Kabel oder Schlauch zur Energieversorgung des zweiten Energiewandlers 8 realisiert werden kann.

Bei der in den Figuren 1 und 2 dargestellten Ausführungsform der Aufspanneinrichtung 1 liegt eine freitragende Anordnung der Haltevorrichtung 3 vor. Hierbei ist die Haltevorrichtung 3 lediglich in radialer Richtung an einer Seite mit der Lagerwelle 16 verbunden und wird ausschließlich über die Kugellager 17, 18 gegenüber der Tragvorrichtung 2 abgestützt. Eine derartige Aufhängung der Haltevorrichtung 3 ist insbesondere dann von Interesse, wenn eine Bearbeitung des nicht dargestellten Werkstücks mit Hilfe von Fluidstrahlverfahren oder optischen Strahlverfahren, beispielsweise Wasserstrahlen, Wasserstrahlentgraten oder Lasern, vorgenommen werden soll. Hierbei werden im Allgemeinen keine allzu hohen Anforderungen an die Positionierung des Werkstücks gegenüber dem nicht dargestellten Bearbeitungswerkzeug gestellt. Bei der freitragenden Anordnung ist von Vorteil, dass die Tragvorrichtung 2 vorzugsweise genau mit einer einzigen Ausnehmung versehen sein muss, durch die die beiden konzentrisch zueinander angeordneten Antriebswellen 16, 22 geführt sind. Bei einer freitragenden Anordnung können die notwendigen Abdichtmaßnahmen für die beiden Antriebswellen 16, 22 gering gehalten werden. Dies ist darauf zurückzuführen, dass im Bereich der Tragvorrichtung 2 lediglich eine Abdichtung der Lagerwelle 16 gegenüber der Stützmuffe 19 erforderlich ist. Die Antriebswelle 22 ist vollständig gekapselt in der drehfest mit dem Drehkranz 21 verbundenen Lagerwelle 16 geführt. Dies bedeutet insbesondere bei der Verwendung der Aufspanneinrichtung 1 in Verbindung mit einem spanabhebenden Verfahren, insbesondere einer Wasserstrahlanwendung, einen erheblichen Vorteil, da hier insbesondere die Dichtungen stark beansprucht werden und die Einsparung einer Dichtung für die Antriebswelle 22 somit eine deutliche Erhöhung der Betriebssicherheit für die Aufspanneinrichtung 1 bedeutet.

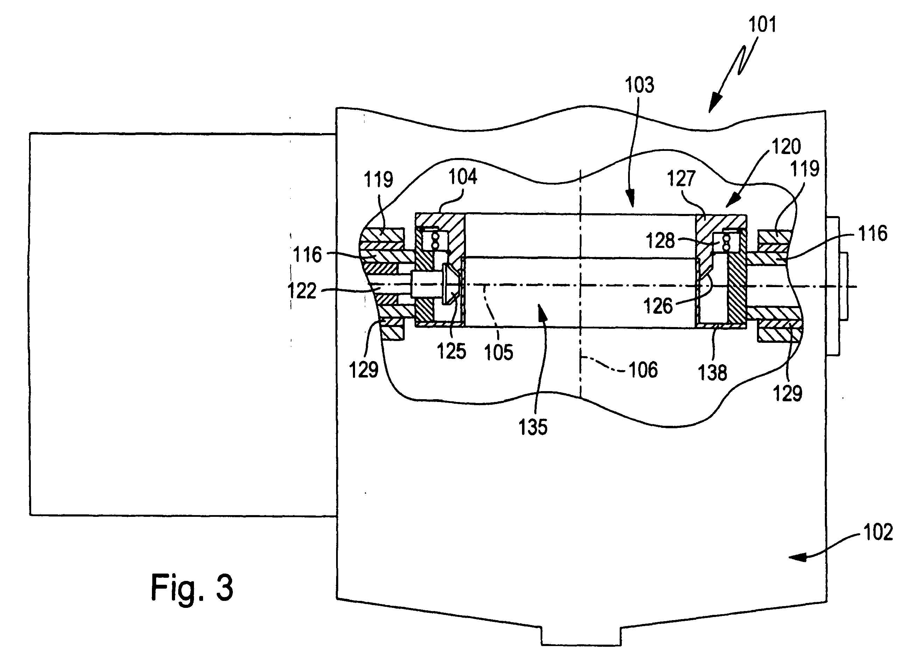

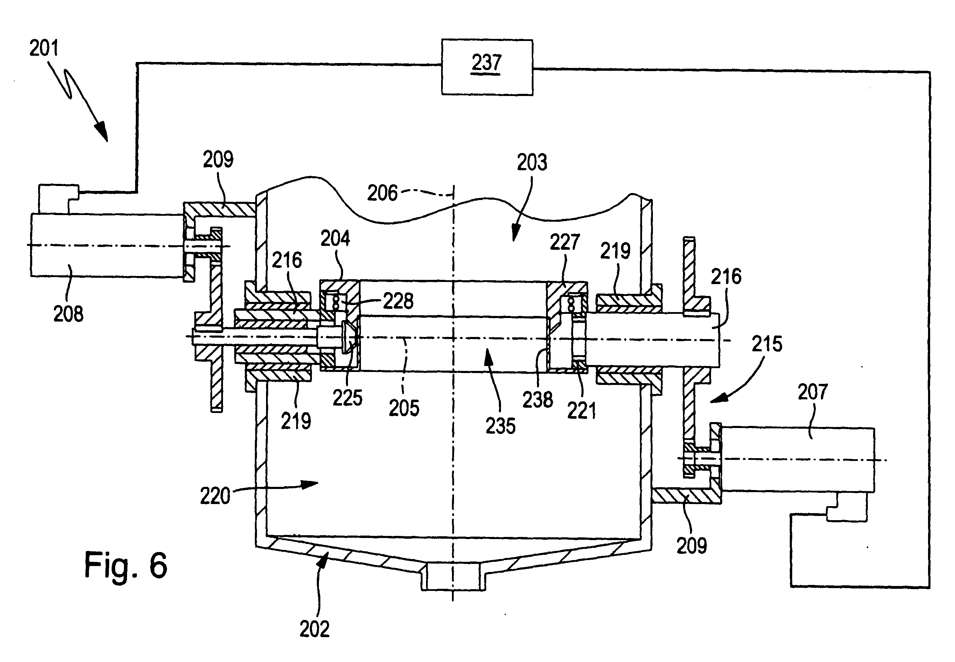

Die in den Figuren 3, 4 und 5 dargestellte zweite Ausführungsform einer Aufspanneinrichtung 101 unterscheidet sich von der in den Figuren 1 und 2 dargestellten Aufspanneinrichtung 1 durch eine beidseitige Lagerung der Haltevorrichtung 103. Funktionsgleiche Komponenten werden mit um 100 erhöhten Bezugsziffern bezeichnet und nicht nochmals eingehend beschrieben, gleiches gilt auch für die dritte Ausführungsform einer Aufspanneinrichtung 201, die in der Figur 6 dargestellt ist.

Aus Vereinfachungsgründen sind die jeweils vom Drehkranz 121 abragenden Lagerwellen 116 in Gleitlagern 129 aufgenommen, die ihrerseits in den Stützmuffen 119 gehalten werden. Eine Ausführung mit Kugellagern, wie sie von der ersten Ausführungsform der Aufspanneinrichtung 1 bekannt ist, kann für die Aufspanneinrichtung 101 ebenfalls vorgesehen werden.

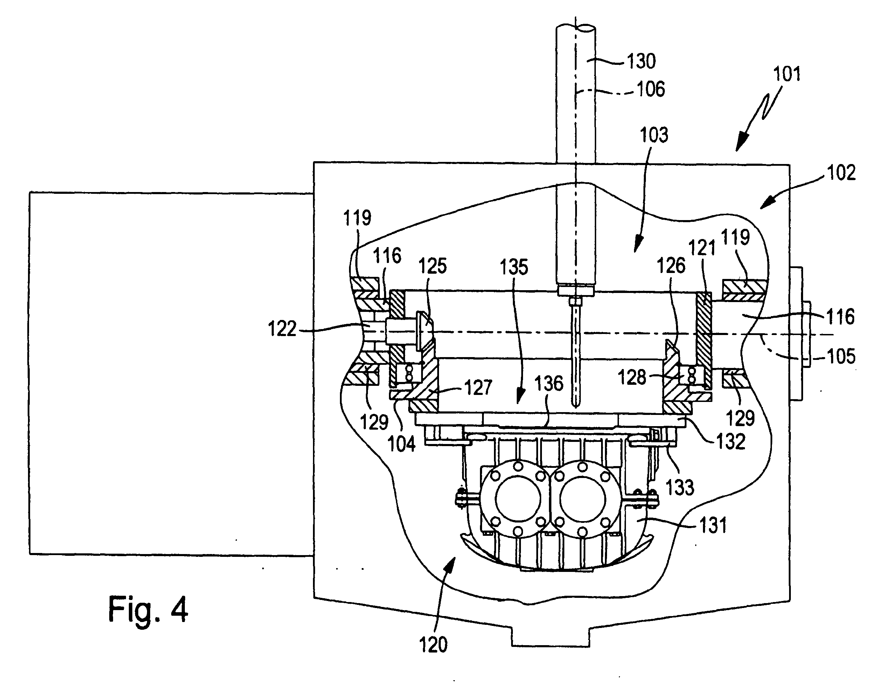

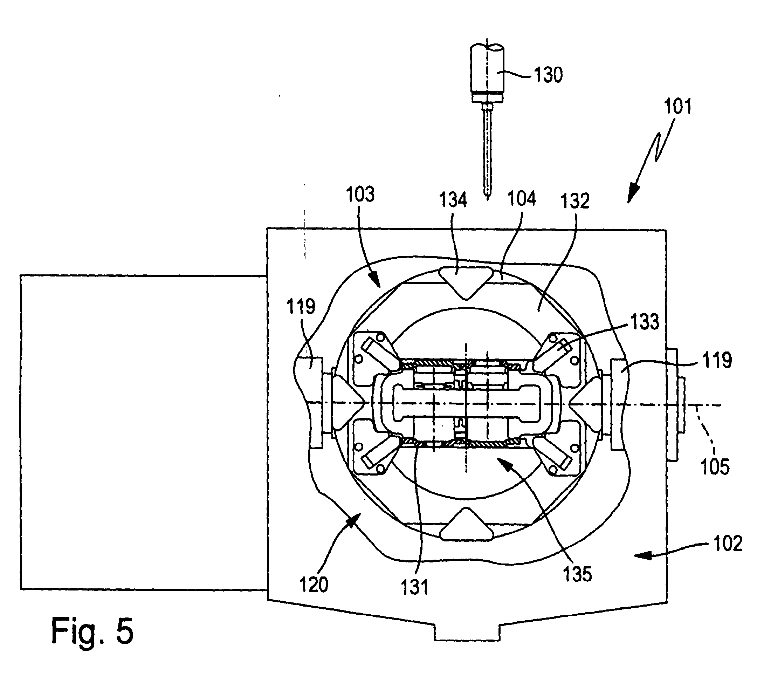

In den Figuren 4 und 5 sind sowohl ein Bearbeitungswerkzeug 130 als auch ein Werkstück 131 schematisch dargestellt. Das Werkstück 131 ist, wie dies insbesondere aus Figur 5 hervorgeht, auf einem rahmenförmigen Werkstückträger 132 aufgespannt, der auch als Werkstückpalette bezeichnet wird. Das Werkstück 131 ist mit schematisch dargestellten Spannpratzen 133-am Werkstückträger 132 festgelegt. Der Werkstückträger 132 ist seinerseits mittels mehrerer Niederhalter 134 auf der Aufspannfläche 104 der Haltevorrichtung 103 festgelegt.

Bei der Darstellung gemäß Figur 4, in der aus Vereinfachungsgründen die Flanschhülse nicht dargestellt wird, ist erkennbar, dass das Bearbeitungswerkzeug 130 in eine von dem Drehkranz 121 und dem Drehtisch 127 bestimmte Arbeitsausnehmung 135 hineinragt und bis an die der Aufspannfläche 104 zugewandte Werkstückoberfläche geführt werden kann, um dort die entsprechenden Bearbeitungsschritte am Werkstück 131 vornehmen zu können.

Wie aus den Figuren 4 und 5 entnommen werden kann, ist der Durchmesser der exemplarisch zylindrisch ausgebildeten Arbeitsausnehmung 135 größer als eine größte Querschnittserstreckung des Werkstücks 131 in der Darstellungsebene gemäß der Figur 5. Somit kann abgesehen von den Kontaktflächen der Spannpratzen 133 mit dem Werkstück 131 und den Auflageflächen des Werkstücks 131 auf dem Werkstückträger 132 auch eine vollständige Bearbeitung der Werkstückoberfläche 136 stattfinden, die der Aufspannfläche 104 zugewandt ist.

In der Figur 6 ist eine weitere Ausführungsform einer Aufspanneinrichtung 201 dargestellt, die sich von den Aufspanneinrichtungen 1 und 101 dadurch unterscheidet, dass beide Energiewandler 207, 208 an einander entgegengesetzten Außenoberflächenabschnitten der Tragvorrichtung 202 angeordnet sind. Beide Energiewandler 207, 208 sind über Haltebügel 209 drehfest mit der Tragvorrichtung 202 gekoppelt. Hierdurch wird erreicht, dass sowohl die Schwenkbewegung um die erste Drehachse 205 wie auch die Schwenkbewegung um die zweite Drehachse 206 ohne Winkelbegrenzung vorgenommen werden kann. Die Schwenkbewegungen um die Drehachsen 205, 206 erfolgen gekoppelt zueinander, so dass eine Einleitung einer Schwenkbewegung mit Hilfe des ersten Energiewandlers 207 und der zugeordneten Getriebeeinrichtung 215 zumindest dann zu einer gekoppelten Schwenkbewegung um die zweite Drehachse 206 führt, wenn der zweite Energiewandler 208 während dieser Schwenkbewegung in einer fixen Position stehenbleibt. In dieser Situation kommt es zu einer Relativbewegung zwischen dem Drehtisch 227 und dem Kegelrad 225, wodurch eine Schwenkbewegung um die zweite Drehachse 206 hervorgerufen wird.

Bei geeigneter Programmierung einer Steuereinrichtung 237, die zur Ansteuerung der Energiewandler 207, 208 eingerichtet ist, kann eine entsprechende Kompensation von Bewegungen um die erste Drehachse 205 vorgenommen werden. Beispielsweise nimmt der zweite Energiewandler 208 bei einer Bewegung des ersten Energiewandlers 207 eine entsprechende Ausgleichsbewegung vornimmt, so dass eine unerwünschte Rotation um die zweite Drehachse 206 verhindert wird. Bei der Steuereinrichtung 237, die auch für die anderen Ausführungsformen 1 und 101 der Aufspanneinrichtung vorgesehen sein kann, handelt es sich entweder um eine separate Steuereinrichtung, die über ein Bussystem mit einer Maschinensteuerung einer nicht dargestellten Bearbeitungsmaschine kommuniziert. Alternativ kann die Steuereinrichtung 237 unmittelbar die Maschinensteuerung der nicht dargestellten Bearbeitungsmaschine sein.

Eine derart ausgebildete Steuereinrichtung ist auch bei den in den Figuren 1 bis 4 dargestellten Vorrichtungen vorzusehen.

## Patentansprüche

1. Aufspanneinrichtung zum Ausrichten eines Werkstücks (131) gegenüber einem Bearbeitungswerkzeug (130), mit einer Tragvorrichtung (2; 102; 202), die zur Übertragung von Bearbeitungskräften zwischen Werkstück (131) und Bearbeitungswerkzeug (130) ausgebildet ist, und mit einer beweglich an der Tragvorrichtung (2; 102; 202) angeordneten Haltevorrichtung (3; 103; 203), die eine zur Aufnahme des Werkstücks (131) eingerichtete Aufspannfläche (4; 104; 204) aufweist, sowie mit Antriebsmitteln (6, 7; 206, 207), die zur Einleitung von Drehbewegungen zwischen Haltevorrichtung (3; 103; 203) und Tragvorrichtung (2; 102; 202) um zwei senkrecht zueinander ausgerichtete Drehachsen (5, 6; 105, 106; 205, 206) ausgebildet sind, wobei die Haltevorrichtung (3; 103; 203) eine Arbeitsausnehmung (35; 135; 235) aufweist, die die'Aufspannfläche (4; 104; 204) derart durchsetzt, dass eine der Aufspannfläche (4; 104; 204) zugewandte Unterseite (136) eines Werkstücks (131) von einem Bearbeitungswerkzeug (130) durch die Arbeitsausnehmung (35; 135; 235) hindurch bearbeitbar ist, **dadurch gekennzeichnet, dass** die Tragvorrichtung (2; 102; 202) hülsenförmig ausgebildet ist und zumindest teilweise einen Arbeitsraum (20; 120; 220) begrenzt, in dem die Haltevorrichtung (3; 103; 203) aufgenommen ist und dass die Antriebsmittel (7, 8; 207, 208) einen elektrischen oder fluidischen Energiewandler umfassen, der außerhalb des Arbeitsraums (20; 120; 220) an der Tragvorrichtung (2; 102; 202) angeordnet ist und der für die Einleitung einer Drehbewegung auf die Haltevorrichtung (3; 103; 203) ausgebildet ist, wobei die Antriebswelle (22; 122) des ersten Energiewandlers (7) und die dem zweiten Energiewandler zugeordnete Antriebswelle (16; 116) koaxial, insbesondere konzentrisch, zueinander angeordnet sind.

2. Aufspanneinrichtung nach Anspruch 1, **dadurch gekennzeichnet, dass** die Haltevorrichtung (3; 103; 203) einen drehbar an der Tragvorrichtung (2; 102; 202) gelagerten Drehkranz (21; 121; 221) und einen drehbar am Drehkranz (21; 121; 221) gelagerten Drehtisch (27; 127; 227) umfasst, wobei die Arbeitsausnehmung (35; 135; 235) von einer ersten Ausnehmung im Drehtisch (27; 127; 227) und/oder von einer zweiten Ausnehmung im Drehkranz (21; 121; 221) bestimmt ist.

3. Aufspanneinrichtung nach Anspruch 2, **dadurch gekennzeichnet, dass** der Drehkranz (21; 121; 221) und/oder der Drehtisch (27; 127; 227) ringartig ausgebildet sind.

4. Aufspanneinrichtung nach Anspruch 1, 2 oder 3, **dadurch gekennzeichnet, dass** die Arbeitsausnehmung (35; 135; 235) derart ausgebildet ist, dass die der Aufspannfläche (4; 104; 204) zugewandte Unterseite (136) eines Werkstücks (131) zumindest im Wesentlichen vollständig von einem Bearbeitungswerkzeug (130) bearbeitbar ist.

5. Aufspanneinrichtung nach Anspruch 2 oder 3, **dadurch gekennzeichnet, dass** ein minimaler Querschnitt der Arbeitsausnehmung (35; 135; 235) größer als eine Radialerstreckung des Drehkranzes (21; 121; 221) und/oder des Drehtisches (27; 127, 227) gewählt ist.

6. Aufspanneinrichtung nach einem der vorhergehenden Ansprüche, **dadurch gekennzeichnet, dass** ein erster Energiewandler (7) drehfest an einer mit einem zweiten Energiewandler (8) gekoppelten Lagerwelle (16; 116) angebracht ist.

7. Aufspanneinrichtung nach einem der vorhergehenden Ansprüche, **dadurch gekennzeichnet, dass** eine dem Energiewandler (7, 8; 207, 208) zugeordnete Welle (16; 116) einen Wandabschnitt der Tragvorrichtung (2; 202) durchsetzt und mit der Haltevorrichtung (3; 103) verbunden ist, wobei zwischen Tragvorrichtung (3; 103) und Welle (16; 116) Dichtmittel für eine Kapselung des Arbeitsraums angeordnet sind.

8. Aufspanneinrichtung nach einem der vorhergehenden Ansprüche, **dadurch gekennzeichnet, dass** die Haltevorrichtung (3) freitragend im Arbeitsraum (20) angeordnet ist und, insbesondere ausschließlich, an der dem Energiewandler (7) zugeordneten Welle (16) abgestützt ist.

9. Aufspanneinrichtung nach einem der Ansprüche 2, 3 oder 5, **dadurch gekennzeichnet, dass** der Drehkranz (121; 221) der Haltevorrichtung (103; 203) an einander gegenüberliegenden Wandabschnitten der Tragvorrichtung (102; 202) drehbar gelagert ist.

10. Aufspanneinrichtung nach einem der vorhergehenden Ansprüche, **dadurch gekennzeichnet, dass** die Energiewandler (207, 208) außerhalb an der Tragvorrichtung (2; 102; 202), insbesondere an entgegengesetzten Außenoberflächenbereichen der Tragvorrichtung (202), angeordnet sind.

11. Aufspanneinrichtung nach einem der Ansprüche 2, 3, 5, oder 9, **dadurch gekennzeichnet, dass** der Drehtisch (27; 127; 227) zusammen mit einer Flanschhülse (38; 138; 238) einen U-förmigen, in radialer Richtung nach außen offenen Querschnitt aufweist, in dem der Drehkranz (21; 121; 221) zumindest teilweise aufgenommen ist.

12. Bearbeitungseinrichtung zur Bearbeitung von Werkstücken mit einem Bearbeitungswerkzeug, **gekennzeichnet durch** eine Aufspanneinrichtung (1; 101; 201) nach einem der Ansprüche 1 bis 11.

## Claims

1. Clamping device for the aligning of a workpiece (131) relative to a machine tool (130), with a support fixture (2; 102; 202) designed for the transfer of machining forces between workpiece (131) and machine tool (130), and with a holding fixture (3; 103; 203) mounted movably on the support fixture (2; 102; 202) and having a clamping surface (4; 104; 204) arranged to hold the workpiece (131), also with drive means (6, 7; 206; 207) designed to initiate rotary movements between holding fixture (3; 103; 203) and support fixture (2; 102; 202) around two axes of rotation (5, 6; 105, 106; 205, 206) aligned at right-angles to one another, wherein the holding fixture (3; 103; 203) has an operating recess (35; 135; 235) which passes through the clamping surface (4; 104; 204) in such a way that an underside (136) of a workpiece (131) facing the clamping surface (4; 104; 204) may be machined by a machine tool (130) through the operating recess (35; 135; 235), **characterised in that** the support fixture (2; 102; 202) is sleeve-shaped and at least partly bounds an operating space (20; 120; 220) in which the holding fixture (3; 103; 203) is accommodated, and that the drive means (7, 8; 207, 208) include an electrical or fluidic energy converter which is mounted on the support fixture (2; 102; 202) outside the operating space (20; 120; 220) and is designed to initiate a rotary movement on the holding fixture (3; 103; 203), wherein the driving shaft (22; 122) of the first energy converter (7) and the driving shaft (16; 116) assigned to the second energy converter are arranged coaxially to one another, in particular concentrically.

2. Clamping device according to claim 1, **characterised in that** the holding fixture (3; 103; 203) comprises a slewing ring (21; 121; 221) mounted rotatably on the support fixture (2; 102; 202) and a rotary table (27; 127; 227) mounted rotatably on the slewing ring (21; 121; 221), wherein the operating recess (35; 135; 235) is provided by a first recess in the rotary table (27; 127; 227) and/or by a second recess in the slewing ring (21; 121; 221).

3. Clamping device according to claim 2, **characterised in that** the slewing ring (21; 121; 221) and/or the rotary table (27; 127; 227) are annular in form.

4. Clamping device according to claim 1, 2 or 3, **characterised in that** the operating recess (35; 135; 235) is so designed that the underside (136) of a workpiece (131) facing the clamping surface (4; 104; 204) may be machined at least substantially completely by a machine tool (130).

5. Clamping device according to claim 2 or 3, **characterised in that** a minimal cross-section of the operating recess (35; 135; 235) is chosen to be greater than a radial extension of the slewing ring (21; 121; 221) and/or the rotary table (27; 127; 227).

6. Clamping device according to any of the preceding claims, **characterised in that** a first energy converter (7) is attached non-rotatably to a bearing shaft (16; 116) connected to a second energy converter (8).

7. Clamping device according to any of the preceding claims, **characterised in that** a shaft (16; 116) assigned to the energy converter (7, 8; 207; 208) passes through a wall section of the support fixture (2; 202) and is connected to the holding fixture (3; 103), wherein sealing means for encapsulation of the operating space are provided between holding fixture (3; 103) and shaft (16; 116).

8. Clamping device according to any of the preceding claims, **characterised in that** the holding fixture (3) is located unsupported in the operating space (20) and, in particular solely, is supported on the shaft (16) assigned to the energy converter (7).

9. Clamping device according to any of claims 2, 3 or 5, **characterised in that** the slewing ring (121; 221) of the holding fixture (103; 203) is mounted rotatably on opposite wall sections of the support fixture (102; 202).

10. Clamping device according to any of the preceding claims, **characterised in that** the energy converters (207, 208) are mounted on the outside of the support fixture (2; 102; 202), in particular on opposite outer surface areas of the support fixture (202).

11. Clamping device according to any of claims 2, 3, 5 or 9, **characterised in that** the rotary table (27; 127; 227) together with the flanged sleeve (38; 138; 238) has a U-shaped cross-section, opening outwards in the radial direction, in which the slewing ring (21; 121; 221) is at least partly accommodated.

12. Machining unit for the machining of workpieces by a machine tool, **characterised by** a clamping device (1; 101; 201) according to any of claims 1 to 11.

## Revendications

1. Dispositif de montage pour positionner une pièce (131) par rapport à un outil de traitement (130) comportant un dispositif de support (2 ; 102 ; 202) qui est formé pour la transmission des forces de traitement entre une pièce (131) et un outil de traitement (130) et comportant un dispositif de maintien (3 ; 103 ; 203) disposé de façon mobile sur le dispositif de support (2 ; 102 ; 202) qui présente une surface de montage (4 ; 104 ; 204) conçue pour la réception de la pièce (131) et des agents d'entraînement (6, 7 ; 206, 207) qui sont formés pour introduire des mouvements de rotation entre le dispositif de maintien (3 ; 103 ; 203) et le dispositif de support (2 ; 102 ; 202) autour de deux axes de rotation (5, 6 ; 105, 106 ; 205, 206) disposés perpendiculairement l'un par rapport à l'autre, le dispositif de maintien (3 ; 103 ; 203) présentant un évidement de travail (35 ; 135 ; 235) qui traverse la surface de montage (4 ; 104 ; 204) de telle sorte que l'un des côtés inférieurs (136) d'une pièce (131) tourné vers la surface de montage (4 ; 104 ; 204) puisse être traité par un outil de traitement (130) par l'évidement de travail (35 ; 135 ; 235), **caractérisé en ce que** le dispositif de support (2 ; 102 ; 202) est conçu en forme de manche et limite au moins partiellement un espace de travail (20 ; 120 ; 220) dans lequel le dispositif de maintien (3 ; 103 ; 203) est reçu et **en ce que** l'agent d'entraînement (7, 8 ; 207, 208) comprend un convertisseur d'énergie électrique ou fluide qui est disposé hors de l'espace de travail (20 ; 120 ; 220) sur le dispositif de support (2 ; 102 ; 202) et qui est formé, pour l'introduction d'un mouvement de rotation, sur le dispositif de maintien (3 ; 103 ; 203), l'axe d'entraînement (22 ; 122) du premier convertisseur d'énergie (7) et l'axe d'entraînement (16, 116) affecté au deuxième convertisseur d'énergie étant disposés l'un par rapport à l'autre coaxialement, en particulier de façon concentrique.

2. Dispositif de montage selon la revendication 1, **caractérisé en ce que** le dispositif de maintien (3 ; 103 ; 203) comprend une couronne pivotante (21 ; 121 ; 221) pouvant tourner, montée sur le dispositif de support (2 ; 102 ; 202) et un plateau rotatif (27 ; 127 ; 227) pouvant tourner, monté sur la couronne pivotante (21 ; 121 ; 221), l'évidement de travail (35 ; 135 ; 235) étant déterminé par un premier évidement dans le plateau tournant (27 ; 127 ; 227) et/ou par un deuxième évidement dans la couronne pivotante (21 ; 121 ; 221).

3. Dispositif de montage selon la revendication 2, **caractérisé en ce que** la couronne pivotante (21 ; 121 ; 221) et/ou le plateau tournant (27 ; 127 ; 227) sont de type annulaire.

4. Dispositif de montage selon la revendication 1, 2 ou 3, **caractérisé en ce que** l'évidement de travail (35 ; 135 ; 235) est conçu de telle sorte que la face inférieure (136) d'une pièce (131) tournée vers la surface de montage (4 ; 104 ; 204) puisse être traitée au moins essentiellement complètement par un outil de traitement (130).

5. Dispositif de montage selon la revendication 2 ou 3, **caractérisé en ce qu'**une section transversale minimale de l'évidement de travail (35 ; 135 ; 235) est plus grande qu'un allongement radial de la couronne pivotante (21 ; 121 ; 221) et/ou du plateau tournant (27 ; 127 ; 227).

6. Dispositif de montage selon l'une des revendications précédentes, **caractérisé en ce qu'**un premier convertisseur d'énergie (7) est placé fixement sur un arbre d'appui (16 ; 116) couplé à un deuxième convertisseur d'énergie (8).

7. Dispositif de montage selon l'une des revendications précédentes, **caractérisé en ce qu'**un arbre (16 ; 116) affecté au convertisseur d'énergie (7, 8 ; 207, 208) traverse un segment de paroi du dispositif de support (2 ; 202) et est relié au dispositif de maintien (3 ; 103), un agent d'étanchéité étant disposé entre le dispositif de support (3 ; 103) et l'arbre (16 ; 116) pour un coffrage de l'espace de travail.

8. Dispositif de montage selon l'une des revendications précédentes, **caractérisé en ce que** le dispositif de maintien (3) est disposé de façon autoportante dans l'espace de travail (20) et s'appuie exclusivement, en particulier sur l'arbre (16) affecté au convertisseur d'énergie (7).

9. Dispositif de montage selon l'une des revendications 2, 3 ou 5, **caractérisé en ce que** la couronne pivotante (121 ; 221) du dispositif de maintien (103 ; 203) est placée sur des segments de paroi du dispositif de support (102 ; 202) opposés les uns aux autres, de façon à pouvoir tourner.

10. Dispositif de montage selon l'une des revendications précédentes, **caractérisé en ce que** le convertisseur d'énergie (207, 208) est disposé à l'extérieur du dispositif de support (2 ; 102 ; 202), en particulier sur des zones de surfaces externes opposées du dispositif de support (202).

11. Dispositif de montage selon l'une des revendications 2, 3, 5 ou 9, **caractérisé en ce que** le plateau tournant (27 ; 127 ; 227) présente conjointement avec un mandrin (38 ; 1 38 ; 238), un e section ouverte vers l'extérieur en forme de U en direction radiale, dans lequel la couronne pivotante (21 ; 121 ; 221) est reçue au moins en partie.

12. Dispositif de traitement pour le traitement de pièces avec un outil de traitement, **caractérisé par** un dispositif de montage (1 ; 101 ; 201) selon l'une des revendications 1 à 11.
